# EUROPÄISCHE PATENTSCHRIFT

(11) **EP 0 337 269 B1**
(45) Veröffentlichungstag und Bekanntmachung des Hinweises auf die Patenterteilung: **30.03.1994**
(21) Anmeldenummer: 89105935.4
(22) Anmeldetag: 05.04.1989
(51) Int. Cl.: H04B 7/26

(54) **Verfahren und Anordnung zum Reduzieren von Frequenzablagen beim Mobilfunk über Satellit**
Method and arrangement for reducing frequency-deviations in a mobile satellite communication
Méthode et dispositif de réduction des dérives de fréquence dans une transmission radio-mobile par satellite

(30) Priorität: 14.04.1988 DE 3812381
(43) Veröffentlichungstag der Anmeldung: 18.10.1989
(73) Patentinhaber: ANT Nachrichtentechnik GmbH, D-71522 Backnang (DE)
(72) Erfinder: Milcz, Wilhelm, Dipl.-Ing., D-7064 Remshalden (DE)

(56) Entgegenhaltungen:
- DE-A- 3 508 069
- PATENT ABSTRACTS OF JAPAN, Band 9, Nr. 147 (E-323)[1870], 21. Juni 1985;& JP-A-60 27 245 (NIPPON DENKI) 12-02-1985
- THIRD INTERNATIONAL CONFERENCE ON SATELLITE SYSTEMS FOR MOBILE COMMUNICATIONS AND NAVIGATION, London, 7.-9. Juni 1983, Seiten 135-139; R.L. Harris et al.: "Satellite communications to a vehicle on the move"

## Beschreibung

Die vorliegende Erfindung geht aus von einem Verfahren und einer Anordnung zum Reduzieren von Frequenzablagen von vorgegebenen Frequenzkanälen, die zur Nachrichtenübertragung zwischen Feststationen und mobilen Teilnehmern über Satelliten vorgesehen sind, wobei jeweils vor Aufnahme einer Verbindung zwischen einem mobilen Teilnehmer und einer Feststation dem mobilen Teilnehmer in einem Organisationskanal der für die Nachrichtenübertragung vorgesehene Frequenzkanal mitgeteilt wird.

Ein derartiges Verfahren ist bekannt aus dem Konferenzbericht "The national Telesystem conference", 7.-10. Nov. 1982 in Galveston USA, Abschn. B1.2.1-B1.3.5, IEEE Katalog Nr. 82 CH 1824-2.

Bei Nachrichtenübertragungssystemen, in denen Nachrichten miteinander austauschende Stationen nicht fest relativ zueinander angeordnet sind, sind Trägerfrequenzverschiebungen auf Grund des Dopplereffekts zu berücksichtigen. Bei der hier behandelten Nachrichtenübertragung zwischen Feststationen und mobilen Teilnehmern mit einem Satelliten als Relaisstation treten Relativbewegungen zwischen den Feststationen und dem Satelliten und zudem zwischen dem Satelliten und den mobilen Teilnehmern auf. Die hierdurch verursachten Frequenzablagen von vorgegebenen Sollfrequenzkanälen, in denen Nutzsignale (z.B. Sprachsignale) übertragen werden sollen, sind zu beachten bei der Dimensionierung der Schutzfrequenzbänder zwischen den einzelnen Nutzfrequenzkanälen.

Es ist nun die Aufgabe der Erfindung, ein Verfahren und eine Anordnung der eingangs genannten Art anzugeben, womit die Frequenzablagen möglichst weitgehend reduziert werden können, so daß die Schutzfrequenzbänder zwischen den Nutzfrequenzkanälen klein gewählt werden können und demzufolge ein zur Verfügung stehender Frequenzbereich in möglichst viele Nutzfrequenzkanäle aufgeteilt werden kann. Dies soll ohne großen Aufwand erreicht werden.

Erfindungsgemäß wird diese Aufgabe durch das im Anspruch 1 angegebene Verfahren und die im Anspruch 5 angegebene Anordnung gelöst. Vorteilhafte Weiterbildungen des Verfahrens gehen aus den Ansprüchen 2 bis 4 und vorteilhafte Weiterbildungen der Anordnung gehen aus den Ansprüchen 6 bis 9 hervor.

Nach dem Verfahren und der Anordnung der Erfindung werden im Satelliten keine Maßnahmen zur Reduktion von Frequenzablagen ergriffen, um im Satelliten aufwendige Schaltungsanordnungen zu vermeiden. Die Detektion der Frequenzablagen geschieht allein in den erdgebundenen Feststationen, also auch nicht bei den mobilen Teilnehmern, um deren schaltungstechnischen Aufwand so gering wie möglich zu halten.

Anhand von in der Zeichnung dargestellten Ausführungsbeispielen wird nachfolgend die Erfindung näher erläutert.

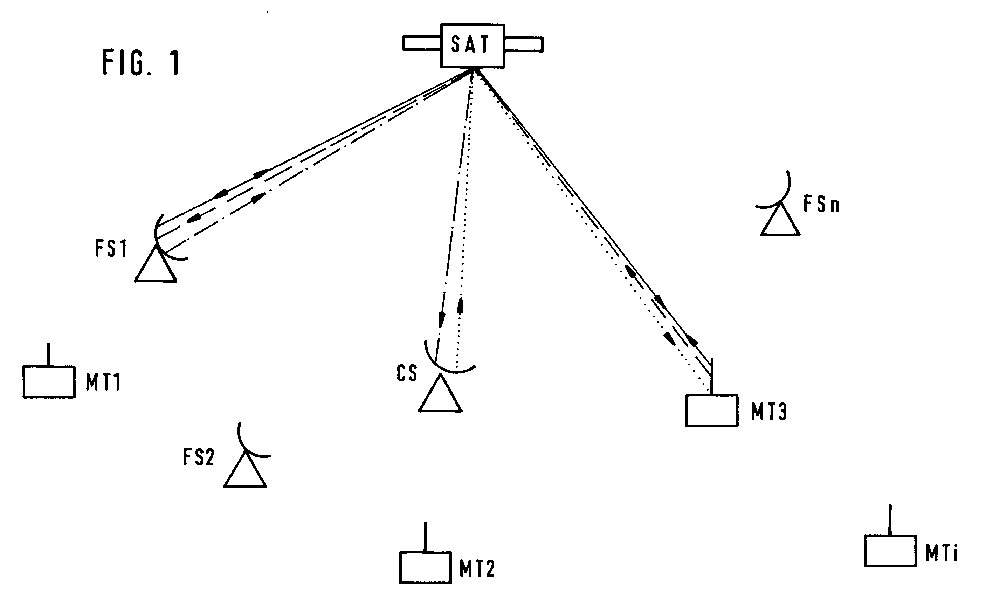

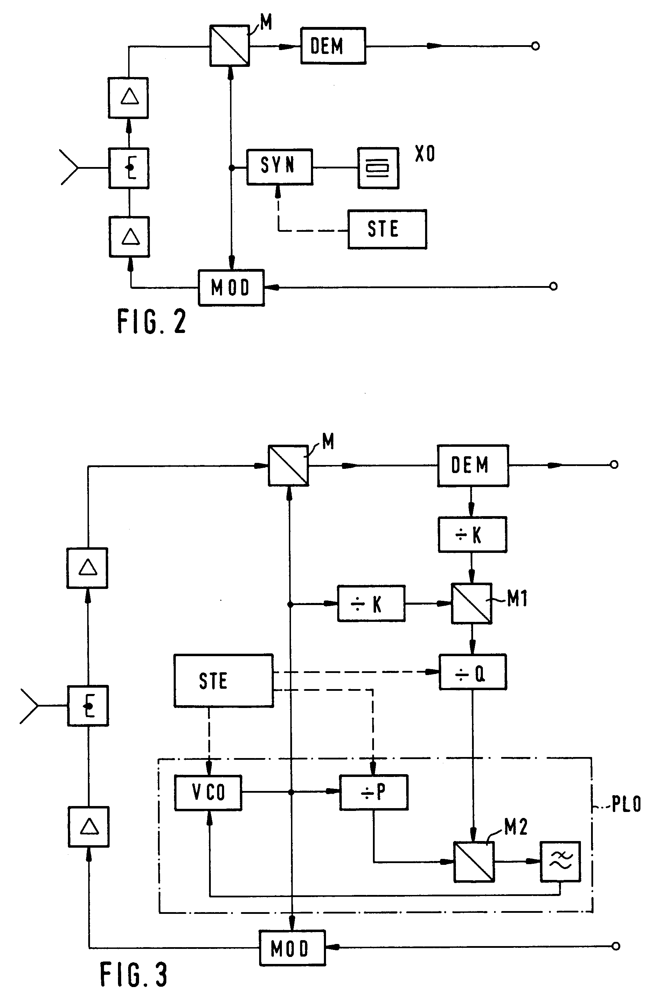

Figur 1 zeigt schematisch ein Nachrichtentübertragungsverfahren zwischen Feststationen und mobilen Teilnehmern über Satellit, und Figuren 2, 3, 4 und 5 zeigen verschiedene Schaltungskonzepte für die mobilen Teilnehmer.

Ein Mobilfunksystem besteht, wie der Figur 1 zu entnehmen ist, aus mehreren erdgebundenen Feststationen FS1, FS2...FSn, die in einem großen Funkverkehrsgebiet verteilt aufgestellt sind, und einer Vielzahl von sich in diesem Funkverkehrsgebiet aufhaltenden mobilen Teilnehmern MT1, MT2, MT3...MTi. Mit mobilen Teilnehmern sind hier z.B. Autos, Schiffe oder auch andere Verkehrsmittel gemeint, die mit einem Funk-Sende-Empfänger ausgestattet sind. Außerdem dient ein Satellit SAT als Relaisstation für die Nachrichtenübertragung zwischen den Feststationen, die mit terrestrischen Fernsprechnetzen verbunden sind, und den mobilen Teilnehmern.
Ist der Satellit nicht geostationär, sondern bewegt sich auf einer Umlaufbahn um die Erde, so ändert sich ständig der Abstand zwischen ihm und einer jeden Feststation FS1...FSn. Das bedeutet, daß sich die auf der Strecke zwischen jeweils einer Feststation und dem Satelliten durch den Dopplereffekt hervorgerufene Frequenzverschiebung zeitabhängig ändert. Und zwar folgt diese Dopplerfrequenzverschiebung einer periodischen Funktion, da der Satellit mit einer Periodizität von z. B. 8 oder 12 Stunden nahezu auf derselben Bahn umläuft. In jeder Feststation wird die Dopplerfrequenzverschiebung mit seiner bekannten zeitlichen Abhängigkeit in der Weise ausgenutzt, daß die Sendesignale von der Feststation um die bekannte augenblickliche Dopplerfrequenzverschiebung, aber mit invertiertem Vorzeichen gegenüber dem jeweiligen Sollfrequenzkanal versetzt zum Satelliten ausgesendet wird. Da nun der Dopplereffekt bei der Übertragung eines Sendesignals zum Satelliten dem in der Feststation gebildeten Frequenzversatz entgegenwirkt, empfängt der Satellit das Signal nahezu korrekt in dem vorgesehenen Sollfrequenzkanal.

Eine zusätzliche Frequenzablage bei der Nachrichtenübertragung zwischen einer Feststation und einem mobilen Teilnehmer über Satellit kommt durch die Relativbewegung zwischen dem Satelliten und dem mobilen Teilnehmer zustande. Auch diese Frequenzablage ist zu reduzieren, um die Schutzfrequenzbänder, welche ein Überlappen benachbarter Nutzfrequenzkanäle durch Frequenzverschiebungen verhindern sollen, weiter verschmälern zu können. Nach welchen Verfahren sich die zuletzt erwähnte Frequenzablage reduzieren läßt, sei an folgendem in Figur 1 skizzierten Beispiel dargelegt.

Beabsichtigt z. B. die Feststation FS1, mit dem mobilen Teilnehmer MT3 eine Funkverbindung aufzunehmen, so sendet üblicherweise die Feststation die Kennung des mobilen Teilnehmers MT3 über den Satelliten SAT an eine Kontroll-Feststation CS, und diese Kontroll-Feststation überträgt die Kennung in einem Organisationskanal zurück zum Satelliten SAT, der ihn dann in den Funkverkehrsbereich, in dem sich der mobile Teilnehmer MT3 aufhält, ausstrahlt. Alle mobilen Teilnehmer MT1, MT2, MT3 ... MTi in diesem Funkverkehrsbereich empfangen den Organisationskanal, und nur derjenige mobile Teilnehmer MT3, auf den die Kennung zutrifft, nimmt dann die Funkverbindung mit der rufenden Feststation FS1 auf. Geht umgekehrt von einem mobilen Teilnehmer MT3 ein Ruf an eine Feststation FS1 aus, so sendet der mobile Teilnehmer in einem ihm zugeordneten Signalisierungskanal diesen Ruf aus. In diesem Signalisierungskanal sendet der mobile Teilnehmer MT3 aber in jedem Fall, bevor die Nachrichtenübertragung im Nutzfrequenzkanal zwischen ihm und der korrespondierenden Feststation FS1 beginnt, ein Trägersignal an die Feststation FS1 über den Satelliten SAT aus, wie in Figur 1 durch die strichlierte Linie angedeutet ist.

In der Feststation wird nach Empfang dieses Trägersignals dessen Frequenzablage gegenüber der der Feststation bekannten fest vorgegebenen Frequenz des Signalisierungskanals z. B. mit Hilfe eines kohärenten Umsetzers ermittelt. Um die Frequenzablage sehr exakt detektieren zu können, muß die Feststation einen Oszillator besitzen mit möglichst guter Langzeitstabilität. Der Aufwand, den man zum Erzielen einer hohen Oszillatorstabilität in den relativ wenigen Feststationen betreiben muß, ist gerechtfertigt, zumal deshalb bei den mobilen Teilnehmern auf teuere hochstabile Oszillatoren verzichtet werden kann. Denn bei der feststationsseitigen Detektion der Frequenzablage wird die aufgrund des Dopplereffekts entstandene Frequenzverschiebung und je nach Konfiguration des mobilen Teilnehmers auch der durch Oszillatorinstabilitäten im mobilen Teilnehmer verursachte Frequenzversatz erfaßt. Die Information über die ermittelte Frequenzablage sendet dann die Feststation FS1 über den Satelliten SAT zur Kontroll-Feststation CS aus (vgl. strichpunktierte Linie in Figur 1). Und die Kontroll-Feststation CS überträgt die Information wiederum im Organisationskanal über den Satelliten SAT zu dem betreffenden mobilen Teilnehmer MT3, wie durch die punktierte Linie in Figur 1 angedeutet ist. In dem mobilen Teilnehmer MT3 wird diese Information über die Frequenzablage in der Weise verarbeitet, daß für die anschließende Nutzsignalaussendung (z. B. Sprache) auf einer Frequenz erfolgt, die gegenüber dem vorgesehenen Nutzfrequenzkanal, der dem mobilen Teilnehmer auch über den Organisationskanal mitgeteilt wird, um die Frequenzablage, aber mit invertiertem Vorzeichen, versetzt ist. Da sich während einer Nutzsignalübertragung, vor allem wenn sie von längerer Dauer ist, die Frequenzablage wegen sich ändernder Dopplerfrequenz oder Frequenzdrift des Oszillators im mobilen Teilnehmer verschieben kann, ist es zweckmäßig, nicht nur einmal vor Aufnahme der Nutzsignalübertragung den beschriebenen Prozeß ablaufen zu lassen, sondern ihn in gewissen Zeitabständen unter Zuhilfenahme einer Inbandsignalisierung zu wiederholen. Wie bereits erläutert, können in Folge des geschilderten Verfahrens zur Reduktion von Frequenzablagen die Schutzfrequenzbänder zwischen den zur Verfügung stehenden Nutzfrequenzbändern verschmälert werden.

Die im mobilen Teilnehmer zu kompensierende Frequenzablage läßt sich vorteilhafterweise dadurch reduzieren, daß von der betreffenden Feststation die Signale bereits mit einem solchen Frequenzversatz ausgesendet werden, welcher einer in einem Funkverkehrsbereich (globale Ausleuchtzone oder Teil-Ausleuchtzone eines Satelliten) aufgrund des Dopplereffekts auftretenden mittleren Frequenzablage entspricht. Im mobilen Teilnehmer muß dann nur noch die von dieser mittleren Frequenzablage abweichende, nach dem zuvor beschriebenen Verfahren ermittelte Rest-Frequenzablage kompensiert werden. Die in den einzelnen mobilen Teilnehmern korrigierten Sendeträger erfahren auf der Strecke zum Satelliten Dopplerfrequenzverschiebungen, wobei sich für alle eine gemeinsame mittlere Frequenzverschiebung ergibt, welche von den Feststationen kompensiert wird.

Anschließend werden vier verschiedene Schaltungskonzepte für die mobile Teilnehmer vorgestellt, welche in der Lage sind, die feststationsseitig ermittelte Frequenzablage entsprechend dem beschriebenen Verfahren umzusetzen.

Prinzipiell besitzt jeder mobile Teilnehmer in seinem Empfangszweig einen Mischer M, der das empfangene Hochfrequenzsignal umsetzt, und einen daran angeschlossenen Demodulator DEM mit einer Regelschleife zur Trägerrückgewinnung. Im Sendezweig des mobilen Teilnehmers befindet sich ein Modulator MOD.

Beim Ausführungsbeispiel gemäß Figur 2 wird sowohl die Oszillatorfrequenz für den Mischer M im Empfangszweig als auch die Sendeträgerfrequenz für den Modulator MOD im Sendezweig von einem Frequenzsynthesizer SYN erzeugt, der von einem Freilaufoszillator XO gespeist wird. Entsprechend dem über den Organisationskanal dem mobilen Teilnehmer mitgeteilten Nutzfrequenzkanal für die beabsichtigte Nutzsignalübertragung und der Frequenzablage von diesem Nutzfrequenzkanal wird von einer Steuereinheit STE der Frequenzsynthesizer bzgl. seiner Ausgangsfrequenz so gesteuert, daß die Sendeträgerfrequenz von dem vorgegebenen Nutzfrequenzkanal um die Frequenzablage mit invertiertem Vorzeichen abweicht.

Da bei dieser Schaltungsanordnung ein Freilaufoszillator verwendet wird, für den keine besonderen Stabilisierungsmaßnahmen vorgesehen sind, wirkt sich seine Frequenzablage sowohl auf den Sendesignalträger als auch auf den in eine Zwischenfrequenz umgesetzten, dem Demodulator DEM zugeführten Empfangssignalträger aus.
Die Auswirkung der Oszillatorinstabilität und der Doppler-Frequenzablage auf den umgesetzten Empfangsträger erfordert im Demodulator DEM eine Regelschleife zur Trägerrückgewinnung mit breitem Frequenzregelbereich, die nur mit erhöhtem schaltungstechnischem Aufwand realisiert werden kann.

Mit einem deutlich schmaleren Frequenzregelbereich der Trägerrückgewinnungs-Regelschleife kommt man bei einer in Figur 3 dargestellten Ausführung eines mobilen Teilnehmers aus. Hier ist nämlich anstelle eines Freilaufoszillators ein phasengeregelter Oszillator PLO vorhanden, dessen Ausgangsfrequenz für den Mischer M im Empfangszweig als auch als Sendeträgerfrequenz für den Modulator MOD im Sendezweig dient. Das dem Demodulator DEM zugeführte Trägersignal wird mit der Ausgangsfrequenz des phasengeregelten Oszillators PLO, nachdem beide Frequenzen durch den gleichen Teilfaktor K geteilt worden sind, von einem Mischer M1 umgesetzt. Das Ergebnis dieser Umsetzung ist die durch den Faktor K geteilte Trägerfrequenz des Empfangssignals. Letztere wird über einen Frequenzteiler mit einem Frequenzteilerverhältnis Q einem Mischer M2 im Regelkreis des phasengeregelten Oszillators PLO zugeführt. Dieser Mischer M2 vergleicht den durch das Teilfaktorprodukt K · Q geteilten Empfangssignalträger mit der durch einen anderen Teilfaktor P geteilten Ausgangsfrequenz des phasengeregelten Oszillators PLO. Ein von Null verschiedenes Ausgangssignal steuert die Phase bzw. Frequenz eines spannungsgesteuerten Oszillators VCO.

Die Frequenzteilerverhältnisse Q und P werden von der Steuereinheit STE zunächst so eingestellt, daß der Sendesignalträger in dem dem mobilen Teilnehmer über den Organisationskanal mitgeteilten Nutzfrequenzkanal liegt.

Bei einer gewissen Änderung der Frequenzteilerverhältnisse Q und P, welche von der Steuereinheit STE in Abhängigkeit von der dem mobilen Teilnehmer mitgeteilten Frequenzablage vorgenommen wird, wird das als Sendesignalträger dienende Ausgangssignal des phasengeregelten Oszillators PLO gegenüber dem für die Nutzsignalaussendung vorgesehenen Frequenzkanal um die besagte Frequenzablage mit invertiertem Vorzeichen versetzt sein.

Bei den vorangehend beschriebenen Schaltungskonzepten, bei denen jeweils von einem Oszillator sowohl die Sendeträgerfrequenz als auch die Frequenz zum Umsetzen des Empfangssignalträgers in die Zwischenfrequenzlage geliefert wird, ist zu beachten, daß Änderungen der Zwischenfrequenzlage mittels der im Schaltblock DEM befindlichen Regelschleife zur Trägerrückgewinnung ausgeregelt werden müssen. Die Bandbreite der Regelschleife muß daher so groß gewählt werden, daß von ihr jede Frequenzabweichung der Zwischenfrequenz erfaßt wird.

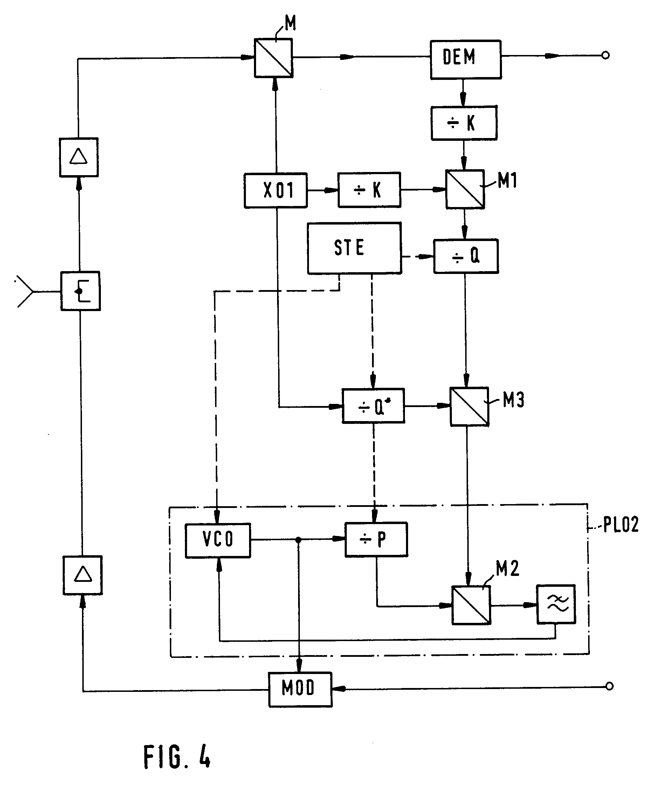

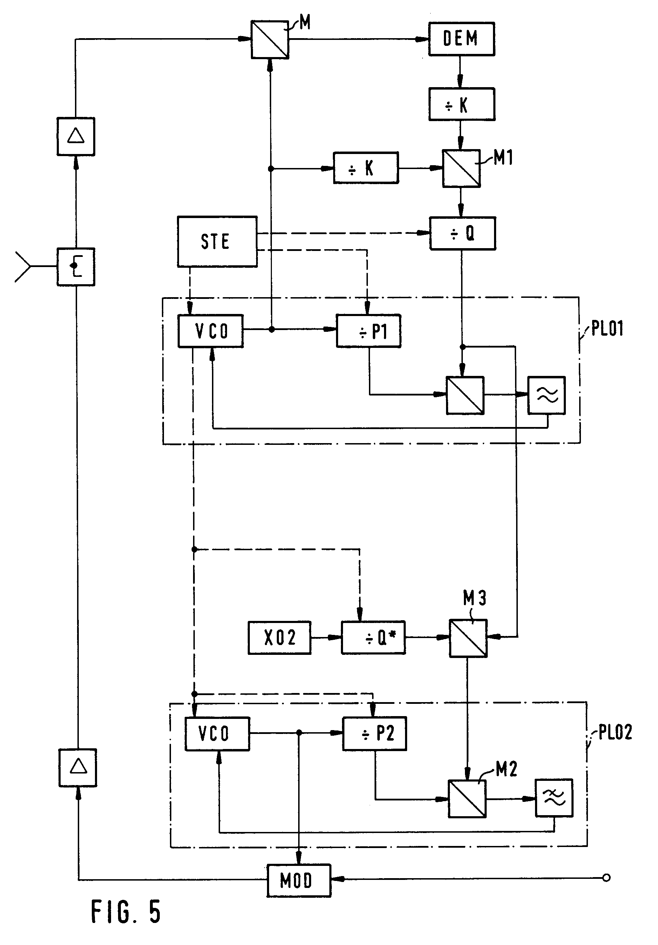

Die beiden nachfolgend beschriebenen Schaltungskonzepte gemäß Fig. 4 und 5 haben den Vorteil, daß eine Korrektur der Sendeträgerfrequenz sich nicht auf die Zwischenfrequenz im Empfangszweig auswirkt, weil hier nämlich für den Empfangssignalzweig und für den Sendesignalzweig getrennte Oszillatoren vorgesehen sind. Bei diesen in den Fig. 4 und 5 dargestellten Schaltungskonzepten sind diejenigen Schaltungseinheiten, weiche die gleichen Funktionen wie entsprechende Schaltungseinheiten der in Fig. 2 und 3 gezeigten Ausführungen haben, auch mit gleichen Bezugszeichen versehen.

Beim Ausführungsbeispiel gemäß Figur 4 wird die Oszillatorfrequenz für den Mischer M im Empfangszweig von einem Freilaufoszillator XO1 und getrennt davon die Sendeträgerfrequenz von einem phasengeregelten Oszillators PLO2 erzeugt. Das dem Demodulator DEM zugeführte Trägersignal wird mit der Frequenz des Freilaufoszillators XO1, nachdem beide Frequenzen durch den gleichen Teilfaktor K geteilt worden sind, von einem Mischer M1 umgesetzt. Das Ergebnis dieser Umsetzung ist die durch den Faktor K geteilte Trägerfrequenz des Empfangssignals. Letztere wird über einen Frequenzteiler mit dem Frequenzteilerverhältnis Q einem Mischer M3 zugeführt. Dieser Mischer M3 setzt den durch den Faktor K · Q geteilten Empfangssignalträger mit der durch einen Teilfaktor Q* geteilten Frequenz des Freilaufoszillators XO um. Die aus dieser Frequenzumsetzung resultierende Frequenz dient als Referenzfrequenz für den phasengeregelten Oszillator PLO2.

Eine Steuereinheit STE stellt die erwähnten Teilfaktoren Q, Q* und einen Teilfaktor P im phasengeregelten Oszillator PLO so ein, daß der mobile Teilnehmer in den ihm von der Kontroll-Feststation zugeordneten Frequenzkanälen empfängt bzw. sendet.
Bei einer gewissen Änderung der Frequenzteilerverhältnisse Q, Q* und P, welche von der Steuereinheit STE in Abhängigkeit von der dem mobilen Teilnehmer mitgeteilten Frequenzablage vorgenommen wird, wird die als Sendesignalträger dienende Ausgangsfrequenz des phasengeregelten Oszillators PLO gegenüber dem für die Nutzsignalaussendung vorgesehene Frequenzkanal um die besagte Frequenzablage mit invertiertem Vorzeichen versetzt sein.
Die durch den Dopplereffekt hervorgerufene Frequenzablage am Ausgang des Teilers Q wird nämlich an der durch den Faktor Q* geteilten Frequenz des Freilaufoszillators XO "gespiegelt", d. h. daß die Frequenzablage des Ausgangssignals des Mischers M3 betragsmäßig gleich ist der Frequenzablage des am Ausgang des Teilers Q erscheinenden Signals, aber ein ihr gegenüber umgekehrtes Vorzeichen besitzt. Unter Voraussetzung einer gleichbleibenden Freilaufoszillatorfrequenz folgt damit die im phasengeregelten Oszillator PLO2 erzeugte Sendeträgerfrequenz der invertierten Dopplerfrequenzänderung der Empfangsträgerfrequenz, so daß die auf der Strecke vom mobilen Teilnehmer zum Satelliten auftretende Dopplerfrequenzverschiebung exakt kompensiert wird.

Ein gegenüber dem soeben beschriebenen Schaltungskonzept für einen mobilen Teilnehmer nur etwas verändertes zweites Schaltungskonzept ist der Figur 5 zu entnehmen. Anders gegenüber der Ausführung gemäß Figur 4 ist bei dem in Figur 5 dargestellten mobilen Teilnehmer, daß die Oszillatorfrequenz für den Mischer M im Empfangszweig von einem phasengeregelten Oszillator PLO1 erzeugt wird. Es ist also ein erster phasengeregelter Oszillator PLO1 vorhanden, der die Oszillatorfrequenz für den Mischer M im Empfangszweig liefert, und ein zweiter phasengeregelter Oszillator PLO2 erzeugt die Sendeträgerfrequenz. Neben diesen beiden phasengeregelten Oszillatoren PLO1 und PLO2 gibt es noch einen Freilaufoszillator XO2, der nur die Oszillatorfrequenz für den Mischer M3 liefert. Ansonsten sind alle übrigen beim Ausführungsbeispiel gemäß Figur 4 beschriebenen Schaltungsdetails bei dem in Figur 5 dargestellten Schaltungskonzept erhalten geblieben. Deren nochmalige Erläuterung erübrigt sich daher.

Ein Vorteil des in Figur 5 dargestellten Schaltungskonzepts besteht darin, daß nur eine geringe Bandbreite für den im Schaltblock DEM vorhandenen Regelkreis für die Trägerrückgewinnung erforderlich ist, weil nämlich der phasengeregelte Oszillator PLO1 der Empfangssignalträgerfrequenz nachfolgt, und diese von der sendeseitigen Frequenzkorrektur nicht beeinflußt wird.

## Patentansprüche

1. Verfahren zum Reduzieren von Frequenzablagen von vorgegebenen Frequenzkanälen, die zur Nachrichtenübertragung zwischen Feststationen und mobilen Teilnehmern über Satelliten vorgesehen sind, wobei jeweils vor Aufnahme einer Verbindung zwischen einem mobilen Teilnehmer und einer Feststation dem mobilen Teilnehmer in einem Organisationskanal der für die Nachrichtenübertragung vorgesehene Frequenzkanal mitgeteilt wird, dadurch gekennzeichnet, daß jeder mobile Teilnehmer (MT1, MT2, MT3...MTi) zumindest vor der Übertragung von Nutzsignalen - das sind vorzugsweise Sprachsignale - über einen Signalisierungskanal ein Trägersignal an die jeweils korrespondierende Feststation (FS1, FS2...FSn) aussendet, daß dann in dieser Feststation die Frequenzablage des empfangenen Trägersignals von der fest vorgegebenen Sollfrequenz des betreffenden Signalisierungskanals detektiert wird, daß darauf die detektierte Frequenzablage dem mobilen Teilnehmer mitgeteilt wird und daß schließlich beim mobilen Teilnehmer eine derartige Frequenznachstimmung vorgenommen wird, daß die für die anschließende Nutzsignalaussendung verwendete Frequenz gegenüber dem dafür vorgesehene Nutzfrequenzkanal um die mitgeteilte Frequenzablage, aber mit invertiertem Vorzeichen, verschoben ist.

2. Verfahren nach Anspruch 1, dadurch gekennzeichnet, daß die von der Feststation (FS1) detektierte Frequenzablage zu einer Kontroll-Feststation (CS) übertragen wird und von dieser in einem Organisationskanal über den Satelliten (SAT) in den Funkverkehrsbereich, in dem sich der betreffende mobile Teilnehmer (MT3) aufhält, ausgesendet wird.

3. Verfahren nach Anspruch 1 oder 2, dadurch gekennzeichnet, daß während einer Nutzsignalübertragung zwischen einem mobilen Teilnehmer (MT3) und einer Feststation (FS1) von dem mobilen Teilnehmer in gewissen Zeitabständen wiederholt ein Trägersignal an die Feststation (FS1) zur Detektion der Frequenzablage ausgesendet wird.

4. Verfahren nach Anspruch 1, dadurch gekennzeichnet,
daß von jeder Feststation (FS1, FS2, ... FSn) die für einen mobilen Teilnehmer (MT1, MT2, MT3 ... MTi) bestimmten Signale mit einem solchen Frequenzversatz ausgesendet werden, welcher einer in einem Funkverkehrsbereich auftretenden mittleren Frequenzablage entspricht und daß die von einer Feststation empfangenen, von mobilen Teilnehmern gesendeten Träger um den mittleren Dopplerfrequenzversatz korrigiert werden.

5. Anordnung zum Reduzieren von Frequenzablagen von vorgegebenen Frequenzkanälen, die zur Nachrichtenübertragung zwischen Feststationen und mobilen Teilnehmern über Satelliten vorgesehen sind, wobei jeweils vor Aufnahme einer Verbindung zwischen einem mobilen Teilnehmer und einer Feststation der mobile Teilnehmer über einen Organisationskanal den für die Nachrichtenübertragung vorgesehene Frequenzkanal empfängt, dadurch gekennzeichnet, daß jeder mobile Teilnehmer (MT1, MT2, MT3...MTi) zumindest vor der Übertragung von Nutzsignalen - das sind vorzugsweise Sprachsignale - über einen Signalisierungskanal ein Träger an die jeweils korrespondierende Feststation (FS1, FS2...FSn) aussendet, daß in dieser Feststation Mittel vorhanden sind, welche die Frequenzablage des empfangenen Trägersignals von der fest vorgegebenen Sollfrequenz des betreffenden Signalisierungskanals detektieren und sie dem mobilen Teilnehmer übertragen, und daß der mobile Teilnehmer Mittel aufweist, welche eine derartige Frequenznachstimmung durchführen, daß die für die anschließende Nutzsignalaussendung verwendete Frequenz gegenüber dem dafür vorgesehene Nutzfrequenzkanal um die mitgeteilte Frequenzablage, aber mit invertiertem Vorzeichen, verschoben ist.

6. Anordnung nach Anspruch 5, dadurch gekennzeichnet, daß der mobile Teilnehmer einen Freilaufoszillator (XO) besitzt, der einen Frequenzsynthesizer (SYN) speist, daß die vom Frequenzsynthesizer (SYN) abgegebene Frequenz sowohl zum Umsetzen eines Empfangssignals in eine für dessen Demodulation geeignete Frequenz als auch als Sendeträgerfrequenz dient und daß der Frequenzsynthesizer (SYN) bezüglich seiner abgegebenen Frequenz entsprechend der dem mobilen Teilnehmer mitgeteilten Frequenzablage einstellbar ist.

7. Anordnung nach Anspruch 5, dadurch gekennzeichnet, daß der mobile Teilnehmer einen phasengeregelten Oszillator (PLO) besitzt, dessen Ausgangsfrequenz sowohl zum Umsetzen eines Empfangssignals in eine für dessen Demodulation geeignete Frequenz als auch als Sendeträgerfrequenz dient, daß Mittel zur Frequenzteilung des regenerierten Empfangssignalträgers, der als Referenzfrequenz für den phasengeregelten Oszillator (PLO) dient, und weitere Mittel zur Frequenzteilung in dem Regelkreis des phasengeregelten Oszillators (PLO) vorhanden sind und daß die Frequenzteilerverhältnisse (Q, P) so einstellbar sind, daß die Ausgangsfrequenz des phasengeregelten Oszillators (PLO) gegenüber dem für die Nutzsignalaussendung vorgesehenen Frequenzkanal um die dem mobilen Teilnehmer mitgeteilte Frequenzablage mit invertiertem Vorzeichen versetzt ist.

8. Anordnung nach Anspruch 5, dadurch gekennzeichnet, daß der mobile Teilnehmer einen Freilaufoszillator (XO1), dessen Frequenz zum Umsetzen eines Empfangssignals in eine für dessen Demodulation geeignete Frequenz dient, und einen phasengeregelten Oszillator (PLO2) besitzt, der eine Sendeträgerfrequenz erzeugt, daß Mittel (M3) vorhanden sind, die den regenerierten Empfangssignalträger mit der Frequenz des Freilaufoszillators (XO1) in ein Trägersignal umsetzen, das als Referenzfrequenz für den phasengeregelten Oszillator (PLO2) dient und daß den zuletzt genannten Mitteln (M3) weitere Mittel zur Frequenzteilung vorgeschaltet sind und ebenso Mittel zur Frequenzteilung im Regelkreis des phasengeregelten Oszillators (PLO2) vorhanden sind, deren Frequenzteilerverhältnisse (Q, Q*, P) so einstellbar sind, daß die Ausgangsfrequenz des phasengeregelten Oszillators (PLO2) gegenüber dem für die Nutzsignalaussendung vorgesehenen Frequenzkanal um die dem mobilen Teilnehmer mitgeteilte Frequenzablage mit invertiertem Vorzeichen versetzt ist.

9. Anordnung nach Anspruch 5, dadurch gekennzeichnet, daß der mobile Teilnehmer einen ersten phasengeregelten Oszillator (PLO1) hat, dessen Frequenz zum Umsetzen eines Empfangssignals in eine für dessen Demodulation geeignete Frequenz dient, und einen zweiten phasengeregelten Oszillator (PLO2) besitzt, der eine Sendeträgerfrequenz erzeugt, daß als Referenzfrequenz für den ersten phasengeregelten Oszillator (PLO1) der regenerierte Empfangssignalträger dient, daß Mittel (M3) vorhanden sind, die den regenerierten Empfangssignalträger mit der Frequenz eines Freilaufoszillators (XO2) in ein Trägersignal umsetzen, das als Referenzfrequenz für den zweiten phasengeregelten Oszillator (PLO2) dient und daß den zuletzt genannten Mitteln (M3) weitere Mittel zur Frequenzteilung vorgeschaltet sind und ebenso Mittel zur Frequenzteilung im Regelkreis des phasengeregelten Oszillators (PLO2) vorhanden sind, deren Frequenzteilerverhältnisse (Q*, P) so einstellbar sind, daß die Ausgangsfrequenz des zweiten phasengeregelten Oszillators (PLO2) gegenüber dem für die Nutzsignalaussendung vorgesehenen Frequenzkanal um die dem mobilen Teilnehmer mitgeteilte Frequenzablage mit invertiertem Vorzeichen versetzt ist.

## Claims

1. Method for reducing the frequency deviations of preset frequency channels which are provided for communications transmission between fixed stations and mobile subscribers by way of satellites, wherein the frequency channel provided for the communications transmission is communicated in an organisation channel to the mobile subscriber before each take-up of a connection between a mobile subscriber and a fixed station, characterised thereby, that each mobile subscriber (MT1, MT2, MT3... MTi) emits a carrier signal by way of a signalling channel to the respective corresponding fixed station (FS1, FS2 ... FSn) at least before the transmission of intelligence signals which preferably are speech signals, that the frequency deviation of the received carrier signal from the fixedly preset target frequency of the signalling channel concerned is then detected in this fixed station, that the detected frequency deviation is thereupon communicated to the mobile subscriber and that finally such a frequency retuning is undertaken at the mobile subscriber that the frequency used for the following intelligence signal emission is shifted by the communicated frequency deviation, but with inverted sign, relative to the intelligence frequency channel provided for this.

2. Method according to claim 1, characterised thereby, that the frequency deviation detected by the fixed station (FS1) is transferred to a controlling fixed station (CS) and from this in an organisation channel by way of the satellite (SAT) into the radio traffic region in which the mobile subscriber (MT3) concerned is situated.

3. Method according to claim 1 or 2, characterised thereby, that a carrier signal to the fixed station (FS1) for the detection of the frequency deviation is emitted repeatedly by the mobile subscriber at certain time intervals during an intelligence signal transmission between a mobile subscriber (MT3) and a fixed station (FS1).

4. Method according to claim 1, characterised thereby, that the signals intended for a mobile subscriber (MT1, MT2, MT3 ... MTi) are emitted by each fixed station (FS1, FS2 ... FSn) with such a frequency shift as corresponds to a mean frequency deviation appearing in a radio traffic region and that the carriers, which are transmitted by mobile subscribers and received by a fixed station, are corrected by the mean Doppler frequency shift.

5. Arrangement for reducing the frequency deviations of preset frequency channels which are provided for communications transmission between fixed stations and mobile subscribers by way of satellites, wherein the mobile subscriber receives the frequency channel provided for the communications transmission by way of an organisation channel before each take-up of a connection between a mobile subscriber and a fixed station, characterised thereby, that each mobile subscriber (MT1, MT2, MT3 ... MTi) emits a carrier by way of a signalling channel to the respective corresponding fixed station (FS1, FS2 ... FSn) at least before the transmission of intelligence signals which preferably are speech signals, that means are present in this fixed station, which detect the frequency deviation of the received carrier signal from the fixedly preset target frequency of the signalling channel concerned and transmit it to the mobile subscriber, and that the mobile subscriber comprises means which perform such a frequency retuning that the frequency used for the following intelligence signal emission is shifted by the communicated frequency deviation, but with inverted sign, relative to the intelligence frequency channel provided for this.

6. Arrangement according to claim 5, characterised thereby, that the mobile subscriber possesses a free-running oscillator (XO), which feeds a frequency synthesiser (SYN), that the frequency delivered by the frequency synthesiser (SYN) serves for the conversion of a received signal into a frequency suitable for its demodulation as well as also as transmission carrier frequency and that the frequency synthesiser (SYN) is adjustable in its delivered frequency in correspondence with the frequency deviation communicated to the mobile subscriber.

7. Arrangement according to claim 5, characterised thereby, that the mobile subscriber possesses a phase-regulated oscillator (PLO), the output frequency of which serves for the conversion of a received signal into a frequency suitable for its demodulation as well as also as transmission carrier frequency, that means are present for the frequency division of the regenerated received signal carrier which serves as reference frequency for the phase-regulated oscillator (PLO) and that further means are present for the frequency division in the regulating loop of the phase-regulated oscillator (PLO) and that the frequency division ratios (Q, P) are so settable that the output frequency of the phase-regulated oscillator (PLO) is shifted with inverted sign by the frequency deviation communicated to the mobile subscriber relative to the frequency channel provided for the intelligence signal emission.

8. Arrangement according to claim 5, characterised thereby, that the mobile subscriber possesses a free-running oscillator (XO1), the frequency of which serves for the conversion of a received signal into a frequency suitable for its demodulation, and a phase-regulated oscillator (PLO2), which generates a transmission carrier frequency, that means (M3) are present, which convert the regenerated reception signal carrier with the frequency of the free-running oscillator (XO1) into a carrier signal which serves as reference frequency for the phase-regulated oscillator (PLO2) and that further means for frequency division are connected in front of the last-mentioned means (M3) and that equally means are present for the frequency division in the regulating loop of the phase-regulated oscillator (PLO2), the frequency division ratios (Q, Q*, P) of which are so settable that the output frequency of the phase-regulated oscillator (PLO2) is shifted with inverted sign by the frequency deviation communicated to the mobile subscriber relative to the frequency channel provided for the intelligence signal emission.

9. Arrangement according to claim 5, characterised thereby, that the mobile subscriber has a first phase-regulated oscillator (PLO1), the frequency of which serves for the conversion of a received signal into a frequency suitable for its demodulation, and possesses a second phase-regulated oscillator (PLO2), which generates a transmission carrier frequency, that the regenerated reception signal carrier serves as reference frequency for the first phase-regulated oscillator (PLO1), that means (M3) are present, which convert the regenerated reception signal carrier with the frequency of a free-running oscillator (XO2) into a carrier signal which serves as reference frequency for the second phase-regulated oscillator (PLO2) and that further means for frequency division are connected in front of the last-mentioned means (M3) and that equally means are present for the frequency division in the regulating loop of the second phase-regulated oscillator (PLO2), the frequency division ratios (Q*, P) of which are so settable that the output frequency of the second phase-regulated oscillator (PLO2) is shifted with inverted sign by the frequency deviation communicated to the mobile subscriber relative to the frequency channel provided for the intelligence signal emission.

## Revendications

1. Procédé pour réduire la dérive de la fréquence nominale de canaux de fréquence prédéterminée, qui sont prévus pour la transmission de l'information entre des stations fixes et des abonnés mobiles, par l'intermédiaire des satelites, procédé dans lequel, avant chaque utilisation d'une liaison entre un abonné mobile et une station fixe est communiqué à l'abonné mobile, dans un canal d'organisation, le canal de fréquence prévu pour la transmission de l'information, procédé caractérisé par le fait qu'au moins avant la transmission de signaux utiles - ce sont de préférence des signaux vocaux -, chaque abonné mobile (MT1, MT2, MT3...MTi) envoie, par l'intermédiaire d'un canal de signalisation, un signal porteur à la station fixe respectivement correspondante (FS1, FS2...FSn), par le fait qu'alors, dans cette station fixe, la dérive de fréquence du signal porteur reçu est détectée par la fréquence, prescrite de façon fixe, du canal de signalisation correspondant, par le fait qu'alors la dérive de fréquence détectée est communiquée à l'abonné mobile et par le fait qu'enfin il est procédé, chez l'abonné mobile, à une reprise d'accord de fréquence de façon telle que la fréquence employée pour l'émission de signaux utiles, qui suit, est décalée, par rapport au canal de fréquence utile prévu pour cela, de la valeur de la dérive de fréquence communiquée, mais de signe opposé.

2. Procédé selon la revendication 1, caractérisé par le fait que la dérive de fréquence détectée par la station fixe (FS1) est transmise à une station fixe de commande (CS) et que celle-ci émet dans un canal d'organisation, par l'intermédiaire du satellite (SAT), sur la plage de radiocommunication sur laquelle se trouve l'abonné mobile en question (MT3).

3. Procédé selon la revendication 1 ou 2, caractérisé par le fait que pendant une transmission de signaux utiles, entre un abonné mobile (MT3) et une station fixe (FS1), l'abonné mobile envoie, à certains intervalles de temps et de façon répétitive, un signal porteur à la station fixe (FS1) pour la détection de la dérive de fréquence.

4. Procédé selon la revendication 1, caractérisé par le fait que chaque station fixe (FS1, FS2, ... FSn) émet les signaux déterminés pour un abonné mobile (MT1, MT2, MT3... MTi) avec un décalage de fréquence qui correspond à une dérive de fréquence moyenne apparaissant sur une plage de radiocommunication, et par le fait que les signaux porteurs envoyés par les abonnés mobiles et reçus par une station fixe sont corrigés de la valeur du décalage de la fréquence Doppler moyenne.

5. Dispositif pour réduire les dérives de la fréquence nominale de canaux de fréquence prédéterminée, qui sont prévus pour la transmission de l'information entre des stations fixes et des abonnés mobiles, par l'intermédiaire de satellites, dispositif dans le cas duquel, avant toute utilisation d'une liaison entre un abonné mobile et une station fixe, l'abonné mobile reçoit, par l'intermédiaire d'un canal d'organisation, le canal de fréquence prévu pour la transmission de l'information, dispositif caractérisé par le fait qu'au moins avant la transmission de signaux utiles - qui sont de préférence des signaux vocaux - chaque abonné mobile (MT1, MT2, MT3... MTi) envoie, par l'intermédiaire d'un canal de signalisation, un signal porteur à la station fixe respectivement correspondante (FS1, FS2...FSn), par le fait que dans cette station fixe existent des moyens qui détectent la dérive de fréquence du signal porteur reçu par rapport à la fréquence, prescrite de façon fixe, du canal de signalisation en question et les transmettent à l'abonné mobile, et par le fait que l'abonné mobile présente des moyens qui procèdent à une reprise d'accord de fréquence de façon telle que la fréquence employée pour l'émission de signaux utiles qui suit est décalée, par rapport au canal de fréquence utile prévu pour cela, de la valeur de la dérive de fréquence communiquée, mais de signe opposé.

6. Dispositif selon la revendication 5, caractérisé par le fait que l'abonné mobile possède un oscillateur libre (XO) qui alimente un synthétiseur de fréquence (SYN), par le fait que la fréquence émise par le synthétiseur de fréquence (SYN) sert aussi bien à convertir un signal reçu en une fréquence appropriée pour sa démodulation que comme fréquence du signal porteur émis et par le fait que le synthétiseur de fréquence (SYN), en ce qui concerne sa fréquence, est réglable en fonction de la dérive de fréquence communiquée à l'abonné mobile.

7. Dispositif selon la revendication 5, caractérisé par le fait que l'abonné mobile possède un oscillateur régulé en phase (PLO) dont la fréquence de sortie sert aussi bien à convertir un signal reçu en une fréquence appropriée pour sa démodulation que comme fréquence du signal porteur émis, par le fait qu'il existe des moyens pour diviser la fréquence du signal porteur du signal reçu, régénéré, qui sert de fréquence de référence pour l'oscillateur régulé en phase (PLO), ainsi que d'autres moyens pour diviser la fréquence dans le circuit de régulation de l'oscillateur régulé en phase (PLO), et par le fait que les paramètres (Q, P) du diviseur de fréquence sont réglables de façon telle que la fréquence de sortie de l'oscillateur régulé en phase (PLO) est décalée, par rapport à celle du canal de fréquence prévu pour l'émission des signaux utiles, de la valeur de la dérive de fréquence communiquée à l'abonné mobile, mais de signe opposé.

8. Dispositif selon la revendication 5, caractérisé par le fait que l'abonné mobile possède un oscillateur libre (XO1) dont la fréquence sert à convertir un signal reçu en une fréquence appropriée pour sa démodulation, ainsi qu'un oscillateur régulé en phase (PLO2) qui produit une fréquence du signal porteur émis, par le fait qu'il existe des moyens (M3) qui convertissent les signaux porteurs du signal reçu, régénéré, par mélange avec la fréquence de l'oscillateur libre (XO1), en un signal porteur qui sert de fréquence de référence pour l'oscillateur régulé en phase (PLO2) et par le fait qu'en amont des moyens mentionnés en dernier lieu (M3) existent d'autres moyens pour la division de fréquence ainsi que des moyens pour la division de fréquence dans le circuit de régulation de l'oscillateur régulé en phase (PLO2), moyens dont les paramètres (Q, Q*, P) des diviseurs de fréquence sont réglables de façon telle que la fréquence de sortie de l'oscillateur régulé en phase (PLO2) est décalée, par rapport à celle du canal de fréquence prévu pour l'émission des signaux utiles, de la valeur de la dérive de fréquence communiquée à l'abonné mobile, mais de signe opposé.

9. Dispositif selon la revendication 5, caractérisé par le fait que l'abonné mobile possède un premier oscillateur régulé en phase (PLO1) dont la fréquence sert à convertir un signal reçu en une fréquence appropriée pour sa démodulation, et possède un second oscillateur régulé en phase (PLO2) qui produit une fréquence de signal porteur émis, par le fait que le signal porteur du signal reçu, régénéré, sert de fréquence de référence pour le premier oscillateur régulé en phase (PLO1), par le fait qu'il existe des moyens (M3) qui convertissent le signal porteur du signal reçu, régénéré, par mélange avec la fréquence d'un oscillateur libre (XO2), en un signal porteur qui sert de fréquence de référence pour le second oscillateur régulé en phase (PLO2) et par le fait qu'en amont des moyens (M3) mentionnés en dernier lieu sont installés d'autre moyens pour la division de fréquence et qu'existent également des moyens pour la division de fréquence dans le circuit de régulation de l'oscillateur régulé en phase (PLO2), moyens dont les paramètres (Q*, P) du diviseur de fréquence sont réglables de façon telle que la fréquence de sortie du second oscillateur régulé en phase (PLO2) est décalée, par rapport à celle du canal de fréquence prévu pour l'émission des signaux utiles, de la valeur de la dérive de fréquence communiquée à l'abonné mobile, mais de signe opposé.
